# EUROPÄISCHE PATENTANMELDUNG

(11) **EP 4 763 617 A1**
(43) Veröffentlichungstag der Anmeldung: **24.06.2026**
(21) Anmeldenummer: 25211711.4
(22) Anmeldetag: 28.10.2025
(51) Int. Cl.: B60Q 1/26, B60Q 1/28, B60Q 1/30, B60Q 1/32, B60R 13/04, B60R 19/02, F21S 43/237, F21S 43/245, F21S 43/27, F21S 45/10

(54) **AUSSENVERKLEIDUNGSTEILANORDNUNG FÜR EIN FAHRZEUG**

(30) Priorität: 19.12.2024 DE 202024107456 U
(71) Anmelder: RESRG Automotive SE & Co. KG, 95111 Rehau (DE)
(72) Erfinder: Gawlik, Thomas, 95111 Rehau (DE); Heinrich, Matthias, 95152 Selbitz (DE)
(74) Vertreter: Grünecker Patent- und Rechtsanwälte PartG mbB

(57) **Zusammenfassung**

Die Erfindung betrifft eine Außenverkleidungsteilanordnung für ein Fahrzeug, mit einem Außenverkleidungsteil (1) und mit einem länglich ausgebildeten Leuchtelement (2) zur partiellen Beleuchtung des Außenverkleidungsteils (1), wobei das Leuchtelement (2) mit dem Außenverkleidungsteil (2) verbunden ist, wobei das Leuchtelement (2) als ein einstückig ausgeformtes flexibles, polymeres Profil (2') ausgebildet ist, das einen Lichtaustrittsbereich (3) und einen Verbindungsabschnitt (4) aufweist, wobei der Lichtaustrittbereich (3) durch einen transparent oder transluzent ausgebildeten Bereich des Profils (2') gebildet ist und, wobei der Verbindungsabschnitt (4) durch ein von dem Lichtaustrittsbereich (3) beabstandetes Rastelement (5) gebildet ist, wobei im verbundenen Zustand von Außenverkleidungsteil (1) und Leuchtelement (2) das Rastelement (5) über eine in dem Außenverkleidungsteil (1) ausgeformte Rastelementaufnahme (6) unmittelbar mit dem Außenverkleidungsteil (1) verbunden ist.

## Beschreibung

Die vorliegende Erfindung betrifft eine Außenverkleidungsteilanordnung für ein Fahrzeug, mit einem Außenverkleidungsteil und mit einem länglich ausgebildeten Leuchtelement zur partiellen Beleuchtung des Außenverkleidungsteils, wobei das Leuchtelement mit dem Außenverkleidungsteil verbunden ist.

Eine entsprechende Außenverkleidungsteilanordnung ist beispielsweise aus der Offenlegung US 2018/0272927 A1 vorbekannt. Dort wird ein Lichtleiter zwischen einer Abdeckung, also dem eigentlichen Außenverkleidungsteil, und einem Tragrahmen formschlüssig aufgenommen und somit indirekt mit dem Außenverkleidungsteil verbunden.

Nachteilig an einer derartigen Außenverkleidungsteilanordnung ist, dass eine Vielzahl von Bauteilen notwendig ist, um das Leuchtelement mit dem Außenverkleidungsteil zu verbinden.

Aufgabe der vorliegenden Erfindung ist es daher eine Außenverkleidungsteilanordnung anzugeben, die eine kostengünstige und einfache Verbindung des Leuchtelements mit dem Außenverkleidungsteil ermöglicht.

Diese Aufgabe wird vorliegend gelöst durch eine Außenverkleidungsteilanordnung für ein Fahrzeug, mit einem Außenverkleidungsteil und mit einem länglich ausgebildeten Leuchtelement zur partiellen Beleuchtung des Außenverkleidungsteils, wobei das Leuchtelement mit dem Außenverkleidungsteil verbunden ist, wobei das Leuchtelement als ein einstückig ausgeformtes flexibles, polymeres Profil ausgebildet ist, das einen Lichtaustrittsbereich und einen Verbindungsabschnitt aufweist, wobei der Lichtaustrittbereich durch einen transparent oder transluzent ausgebildeten Bereich des Profils gebildet ist und, wobei der Verbindungsabschnitt durch ein von dem Lichtaustrittsbereich beabstandetes Rastelement gebildet ist, wobei im verbundenen Zustand von Außenverkleidungsteil und Leuchtelement das Rastelement über eine in dem Außenverkleidungsteil ausgeformte Rastelementaufnahme unmittelbar mit dem Außenverkleidungsteil verbunden ist.

Durch die Integration des Rastelements in dem flexiblen Profil ist ein direkter Verbau des Leuchtelements an dem Verkleidungsteil möglich. Hierdurch wird der Montageumfang und die notwendige Montagezeit deutlich reduziert.

Wenn vorliegend von "Licht" gesprochen wird ist das sichtbare Licht, auch als Licht- oder Farbspektrum bezeichnet, gemeint. Es ist der Teil des elektromagnetischen Spektrums, den das menschliche Auge wahrnehmen kann. Es reicht von Rot (etwa 760 nm) bis Violett (etwa 380 nm). Der Begriff "Lichtstrahlung" umfasst vorliegend das gesamte oder einen Teil dieses Licht- oder Farbspektrums.

Es kann vorgesehen sein, dass das Rastelement durch einen Rastschenkel und einen am Rastschenkel angeordneten Rasthaken gebildet ist.

Es kann vorgesehen sein, dass innerhalb des Profils ein Hohlraum zur Aufnahme einer Lichtleitfaser ausgebildet ist, wobei der Hohlraum so innerhalb des Profils positioniert ist, dass aus einer in dem Hohlraum aufgenommenen Lichtleitfaser austretende Lichtstrahlung aus dem Lichtaustrittsbereich nach außen abstrahlen kann.

Es kann vorgesehen sein, dass in dem Profil an den Lichtaustrittsbereich angrenzend ein Abschattungsabschnitt vorgesehen ist, um Lichtstrahlung in nur einer definierten Abstrahlrichtung aus dem Profil austreten zu lassen.

Es kann vorgesehen sein, dass das Profil aus wenigstens zwei unterschiedlichen Polymermaterialien besteht, wobei der Lichtaustrittsbereich aus einem transparenten oder transluzenten Polymermaterial und der Verbindungsabschnitt und/oder der Abschattungsabschnitt aus einem opaken Polymermaterial besteht oder bestehen.

Vorliegend bedeutet der Begriff "transparentes oder transluzentes Polymermaterial", dass wenigstens eine Wellenlänge - aber nicht zwingend alle Wellenlängen - aus dem sichtbaren Licht- oder Farbspektrum das Polymermaterial passieren kann.

Generell wird ein Material als transparent bezeichnet, wenn es von Licht (oder zumindest einer Wellenlänge des Lichts) im sichtbaren Bereich durchdrungen werden kann. Ein Polymermaterial (oder ein hieraus gefertigtes Element) mit einem Transmissionsgrad von 100% bis etwa 90% gilt noch als transparent. Ein Polymermaterial (oder ein hieraus gefertigtes Element) wird als transluzent bezeichnet, wenn es von Licht (oder zumindest einer Wellenlänge des Lichts) im sichtbaren Bereich durchdrungen wird, dabei aber keine klare Unterscheidung von Objekten mehr zulässt, die sich hinter dem Polymermaterial (oder einem hieraus gefertigten Element) befinden. Ein Polymermaterial (oder ein hieraus gefertigtes Element) mit einem Transmissionsgrad bis etwa 30% gilt noch als transluzent. Der Transmissionsgrad eines Polymermaterials bzw. eines hieraus gefertigten Elements ist der Anteil des Lichtstroms, der durch das Polymermaterial bzw. Element hindurchgeht. Der Transmissionsgrad ist also das Verhältnis der vom Polymermaterial oder dem Element durchgelassenen Lichtintensität zur einfallenden Lichtintensität und nimmt Werte zwischen 0% und 100% an.

Das Gegenteil von Transparenz oder Transluzenz ist Opazität, das bedeutet, dass ein Material lichtundurchlässig oder nahezu lichtundurchlässig ist.

Es kann insbesondere vorgesehen sein, dass das transparente oder transluzente Polymermaterial ein Polyamid, insbesondere Polyamid 12 umfasst.

Es kann insbesondere vorgesehen sein, dass das opake Polymermaterial ein eingefärbtes Polyamid, insbesondere ein eingefärbtes Polyamid 12 umfasst.

Das Einfärben von Polymermaterial ist dem Fachmann bekannt. Es gibt beispielhaft nachfolgende Methoden.

Masterbatch-Verfahren: Dabei werden Farbpigmente in einem Trägermaterial eingebettet. Dieses Farbgranulat wird dann dem Polymermaterialgranulat beigemischt und während des Schmelzprozesses gleichmäßig verteilt.

Flüssigfarbverfahren: Hierbei werden flüssige Farbstoffe direkt in die Polymermaterialschmelze eingebracht.

Direkte Einfärbung: Farbpigmente werden direkt in das Polymermaterialgranulat eingemischt.

Pulverförmige Farbstoffe: Diese werden dem Polymermaterialgranulat beigemischt und während des Schmelzprozesses verteilt.

Es kann vorgesehen sein, dass die Rastelementaufnahme zumindest teilweise durch einen im Querschnitt U-förmig oder V-förmig ausgebildeten Aufnahmebereich des Außenverkleidungsteils gebildet ist, wobei innerhalb des Aufnahmebereichs wenigstens ein hinterschnittig ausgebildetes Fixierelement vorgesehen ist, welches das Rastelement, insbesondere einen Rasthaken des Rastelements, lagefixiert.

Es kann vorgesehen sein, dass in der Nähe des Übergangs von Lichtaustrittsbereich zu Abschattungsabschnitt, der Abschattungsabschnitt im Querschnitt zusätzlich wenigstens eine nach außen abstehende Ausformungen aufweist, die in Richtung der Rastelementaufnahme austretendes Streulicht abschirmt.

Es kann insbesondere vorgesehen sein, dass das Profil ein einstückig geformtes Extrusionsprofil ist. Das heißt, dass das Profil in einem Co-Extrusionsverfahren oder Post-Co-Extrusionsverfahren hergestellt ist. Das Co-Extrusionsverfahren ist eine Erweiterung des Extrusionsverfahrens, bei dem zwei oder mehr Grundmaterialien gleichzeitig durch eine Düse gepresst werden, um ein Produkt mit mehreren Komponenten zu erzeugen. Das Post-Co-Extrusionsverfahren ist ein Verfahren, bei dem nach der eigentlichen Extrusion eines Grundmaterials oder mehrerer Grundmaterialien ein weiteres Material auf das bereits extrudierte Produkt aufgebracht wird.

Es kann vorgesehen sein, dass das Außenverkleidungsteil ein Kühlerschutzgitter oder ein Frontpanel oder eine Stoßfängerverkleidung oder eine Spoileraußenhaut oder eine Schwellerverkleidung oder eine Kotflügelverkleidung ist. Eine Frontpanel ist derjenige Teil eines Fahrzeugs an dessen Stelle sich bei Verbrennungsfahrzeugen der Kühlergrill befunden hat. Insbesondere bei Elektrofahrzeugen ist dieses Frontpanel nicht mehr als Lufteinlass zu dem Kühler (den es hier nicht mehr gibt) ausgebildet, sondern als Designelement in der Fahrzeugmitte vorgesehen.

Es kann vorgesehen sein, dass das Außenverkleidungsteil aus einem thermoplastischen Polymermaterial gebildet ist.

Es kann vorgesehen sein, dass das thermoplastische Polymermaterial für das Außenverkleidungsteil Acrylester-Styrol-Acrylnitril (ASA), Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC), PP-EPDM oder Mischungen der vorgenannten Materialen umfasst.

### Ausführungsbeispiele

Im Folgenden wird die Erfindung anhand lediglich ein Ausführungsbeispiel darstellender Zeichnungen erläutert. Es zeigen schematisch:
- Fig. 1:: eine Querschnittsdarstellung durch eine Außenverkleidungsteilanordnung;
- Fig. 2:: eine weitere Querschnittsdarstellung durch die Außenverkleidungsteilanordnung.

In den Figuren werden gleiche oder funktionsgleiche Elemente mit den gleichen Bezugszeichen versehen.

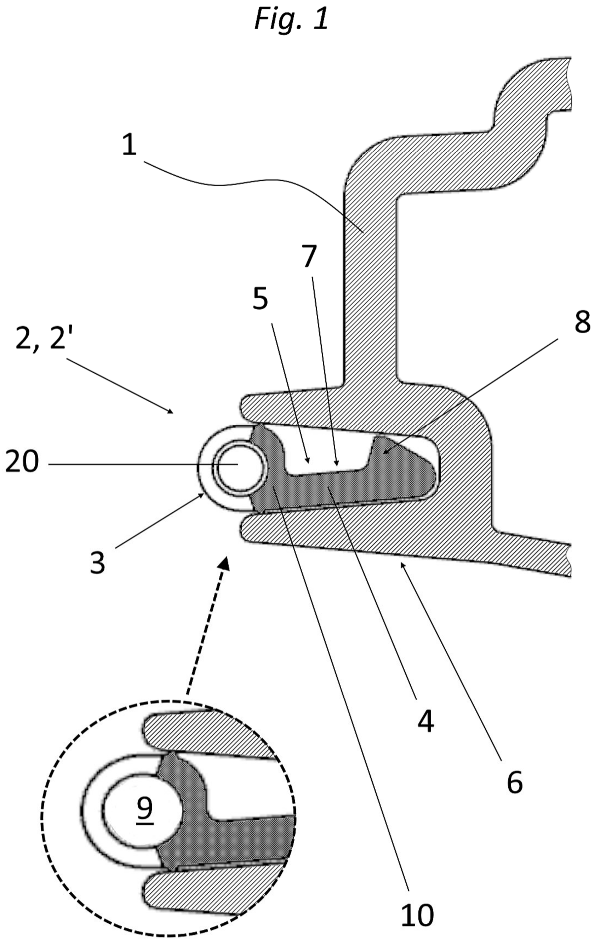

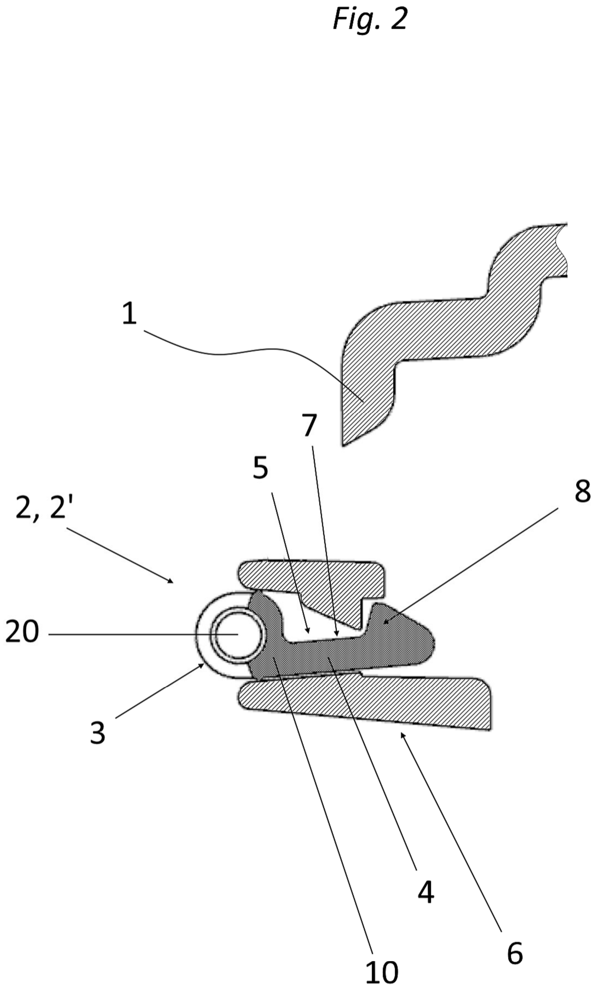

Die Fig. 1 und die Fig. 2 zeigen in einer Querschnittsdarstellung eine Außenverkleidungsteilanordnung für ein Fahrzeug, mit einem Außenverkleidungsteil 1 und mit einem länglich ausgebildeten Leuchtelement 2 zur partiellen Beleuchtung des Außenverkleidungsteils 1, wobei das Leuchtelement 2 mit dem Außenverkleidungsteil 2 verbunden ist.

Das Leuchtelement 2 ist als ein einstückig ausgeformtes flexibles, polymeres Profil 2' ausgebildet, das einen Lichtaustrittsbereich 3 und einen Verbindungsabschnitt 4 aufweist.

Der Lichtaustrittbereich 3 ist durch einen transparent oder transluzent ausgebildeten Bereich des Profils 2' gebildet.

Der Verbindungsabschnitt 4 ist durch ein von dem Lichtaustrittsbereich 3 beabstandetes Rastelement 5 gebildet.

Im verbundenen Zustand von Außenverkleidungsteil 1 und Leuchtelement 2 ist das Rastelement 5 über eine in dem Außenverkleidungsteil 1 ausgeformte Rastelementaufnahme 6 unmittelbar mit dem Außenverkleidungsteil 1 verbunden.

Das Rastelement 5 ist durch einen Rastschenkel 7 und einen am Rastschenkel 7 angeordneten Rasthaken 8 gebildet.

In der Fig. 1 ist in dem vergrößerten Teilbereich (dort ohne eine Lichtleitfaser zur besseren Darstellbarkeit) erkennbar, dass innerhalb des Profils 2' ein Hohlraum 9 zur Aufnahme einer Lichtleitfaser 20 (s. Hauptzeichnung der Fig. 1) ausgebildet ist, wobei der Hohlraum 9 so innerhalb des Profils 2` positioniert ist, dass aus einer in dem Hohlraum 9 aufgenommenen Lichtleitfaser 20 austretende Lichtstrahlung aus dem Lichtaustrittsbereich 3 nach außen abstrahlen kann.

In dem Profil 2` ist an den Lichtaustrittsbereich 3 angrenzend ein Abschattungsabschnitt 10 vorgesehen, um Lichtstrahlung in nur einer definierten Abstrahlrichtung aus dem Profil 2' austreten zu lassen.

In der Nähe des Übergangs von Lichtaustrittsbereich 3 zu Abschattungsabschnitt 10 weist der Abschattungsabschnitt 10 im Querschnitt zusätzlich wenigstens eine (vorliegend zwei) nach außen abstehende Ausformungen auf, die in Richtung der Rastelementaufnahme 6 austretendes Streulicht abschirmt.

Das Profil 2' besteht aus wenigstens zwei unterschiedlichen Polymermaterialien, wobei der Lichtaustrittsbereich 3 aus einem transparenten oder transluzenten Polymermaterial und der Verbindungsabschnitt 4 und der Abschattungsabschnitt 10 aus einem opaken Polymermaterial bestehen.

Das transparente oder transluzente Polymermaterial umfasst ein Polyamid, insbesondere ein Polyamid 12.

Das opake Polymermaterial umfasst ein eingefärbtes Polyamid, insbesondere ein eingefärbtes Polyamid 12.

In der Fig. 1 und Fig. 2 ist erkennbar, dass die Rastelementaufnahme 6 durch einen im Querschnitt zumindest teilweise U-förmig ausgebildeten Aufnahmebereich des Außenverkleidungsteils 1 gebildet ist, wobei innerhalb des Aufnahmebereichs wenigstens ein hinterschnittig ausgebildetes Fixierelement 11 vorgesehen ist, welches das Rastelement 5, insbesondere den Rasthaken 8 des Rastelements 5, lagefixiert.

Das Profil 2' ist ein einstückig geformtes Extrusionsprofil.

Das in den Figuren gezeigte Außenverkleidungsteil 1 ist ein Kühlerschutzgitter. Könnte jedoch beispielsweise auch ein Frontpanel oder eine Stoßfängerverkleidung oder eine Spoileraußenhaut oder eine Schwellerverkleidung oder eine Kotflügelverkleidung sein.

## Patentansprüche

1. Außenverkleidungsteilanordnung für ein Fahrzeug, mit
- einem Außenverkleidungsteil (1) und mit
- einem länglich ausgebildeten Leuchtelement (2) zur partiellen Beleuchtung des Außenverkleidungsteils (1),
wobei das Leuchtelement (2) mit dem Außenverkleidungsteil (2) verbunden ist,
**dadurch gekennzeichnet, dass**
das Leuchtelement (2) als ein einstückig ausgeformtes flexibles, polymeres Profil (2') ausgebildet ist, das einen Lichtaustrittsbereich (3) und einen Verbindungsabschnitt (4) aufweist,
wobei der Lichtaustrittbereich (3) durch einen transparent oder transluzent ausgebildeten Bereich des Profils (2') gebildet ist und,
wobei der Verbindungsabschnitt (4) durch ein von dem Lichtaustrittsbereich (3) beabstandetes Rastelement (5) gebildet ist,
wobei im verbundenen Zustand von Außenverkleidungsteil (1) und Leuchtelement (2) das Rastelement (5) über eine in dem Außenverkleidungsteil (1) ausgeformte Rastelementaufnahme (6) unmittelbar mit dem Außenverkleidungsteil (1) verbunden ist.

2. Außenverkleidungsteilanordnung nach Anspruch 1, **dadurch gekennzeichnet, dass** das Rastelement (5) durch einen Rastschenkel (7) und einen am Rastschenkel (7) angeordneten Rasthaken (8) gebildet ist.

3. Außenverkleidungsteilanordnung nach Anspruch 1 oder 2, **dadurch gekennzeichnet, dass** innerhalb des Profils (2') ein Hohlraum (9) zur Aufnahme einer Lichtleitfaser (20) ausgebildet ist, wobei der Hohlraum (9) so innerhalb des Profils (2') positioniert ist, dass aus einer in dem Hohlraum (9) aufgenommenen Lichtleitfaser (20) austretende Lichtstrahlung aus dem Lichtaustrittsbereich (3) nach außen abstrahlen kann.

4. Außenverkleidungsteilanordnung nach einem der vorstehenden Ansprüche, **dadurch gekennzeichnet, dass** in dem Profil (2') an den Lichtaustrittsbereich (3) angrenzend ein Abschattungsabschnitt (10) vorgesehen ist, um Lichtstrahlung in nur einer definierten Abstrahlrichtung aus dem Profil (2') austreten zu lassen.

5. Außenverkleidungsteilanordnung nach einem der vorstehenden Ansprüche, **dadurch gekennzeichnet, dass** das Profil (2') aus wenigstens zwei unterschiedlichen Polymermaterialien besteht, wobei der Lichtaustrittsbereich (3) aus einem transparenten oder transluzenten Polymermaterial und der Verbindungsabschnitt (4) und/oder der Abschattungsabschnitt (10) aus einem opaken Polymermaterial besteht oder bestehen.

6. Außenverkleidungsteilanordnung nach Anspruch 5, **dadurch gekennzeichnet, dass** das transparente oder transluzente Polymermaterial ein Polyamid (PA), insbesondere Polyamid 12 umfasst.

7. Außenverkleidungsteilanordnung nach Anspruch 5 oder 6, **dadurch gekennzeichnet**, opake Polymermaterial ein eingefärbtes Polyamid, insbesondere ein eingefärbtes Polyamid 12 umfasst.

8. Außenverkleidungsteilanordnung nach einem der vorstehenden Ansprüche, **dadurch gekennzeichnet, dass** die Rastelementaufnahme (6) durch einen im Querschnitt U-förmig oder V-förmig ausgebildeten Aufnahmebereich des Außenverkleidungsteils (1) gebildet ist, wobei innerhalb des Aufnahmebereichs wenigstens ein hinterschnittig ausgebildetes Fixierelement (11) vorgesehen ist, welches das Rastelement (5), insbesondere einen Rasthaken (8) des Rastelements (5), lagefixiert.

9. Außenverkleidungsteilanordnung nach einem der vorstehenden Ansprüche, **dadurch gekennzeichnet, dass** das Profil (2') ein einstückig geformtes Extrusionsprofil ist.

10. Außenverkleidungsteilanordnung nach einem der vorstehenden Ansprüche, **dadurch gekennzeichnet, dass** das Außenverkleidungsteil (1) ein Kühlerschutzgitter oder ein Frontpanel oder eine Stoßfängerverkleidung oder eine Spoileraußenhaut oder eine Schwellerverkleidung oder eine Kotflügelverkleidung ist.
